(19) Europäisches Patentamt
European Patent Office
Office européen des brevets

(11) **EP 4 198 668 B1**

(12) **FASCICULE DE BREVET EUROPEEN**

(45) Date de publication et mention
de la délivrance du brevet:
**04.09.2024 Bulletin 2024/36**

(21) Numéro de dépôt: **22213750.7**

(22) Date de dépôt: **15.12.2022**

(51) Classification Internationale des Brevets (IPC):
***G05B 23/02*** *(2006.01)* ***G06F 18/24*** *(2023.01)*

(52) Classification Coopérative des Brevets (CPC):
**G05B 23/0281; G05B 23/024; G05B 23/027;
G06F 18/24;** G06F 2218/00

(54) **PROCÉDÉ ET SYSTÈME DE DÉTECTION ET DE CARACTÉRISATION DE SIGNAUX FAIBLES D'EXPOSITION À UN RISQUE DANS UN SYSTÈME INDUSTRIEL**

VERFAHREN UND SYSTEM ZUR ERKENNUNG UND CHARAKTERISIERUNG VON SCHWACHEN RISIKOEXPOSITIONSSIGNALEN IN EINEM INDUSTRIELLEN SYSTEM

METHOD AND SYSTEM FOR DETECTION AND CHARACTERIZATION OF LOW RISK EXPOSURE SIGNALS IN AN INDUSTRIAL SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **16.12.2021 FR 2113680**

(43) Date de publication de la demande:
**21.06.2023 Bulletin 2023/25**

(73) Titulaire: **Commissariat à l'énergie atomique et aux énergies alternatives
75015 Paris (FR)**

(72) Inventeur: **BERDOUZ QRICHI ANIBA, Hakima
75014 Paris (FR)**

(74) Mandataire: **Lavoix
2, place d'Estienne d'Orves
75441 Paris Cedex 09 (FR)**

(56) Documents cités:
**EP-A2- 2 015 186 WO-A1-2018/009733**

**Description**

La présente invention concerne un procédé et un système de détection et de caractérisation de signaux faibles d'exposition à un risque dans un système industriel.

L'invention se situe dans le domaine de la sécurité des systèmes, en particulier des systèmes industriels, dans l'objectif d'une détection précoce et une prévention d'évènements significatifs, présentant un risque de sécurité.

En particulier, l'invention s'applique dans les domaines de la détection d'anomalies, de la maintenance prédictive, de la supervision de sécurité, de l'analyse de sûreté.

Dans le contexte de l'invention, on définit un signal faible d'exposition à un risque comme étant une caractéristique liée à l'état du système à un instant t, en particulier au système industriel, qui est observé, cette caractéristique étant mesurable et susceptible d'évoluer dans le temps.

Un signal faible est la mesure (valeur) ou l'impact à un instant t d'une incubation définie comme étant une accumulation ou succession d'événements élémentaires, le plus souvent mineurs voire négligeables en termes de sûreté/sécurité, annonciatrice de la réalisation d'une tendance, menace, anomalie et/ou défaillance voire d'un événement majeur.

Dans le contexte de l'invention, le risque désigne un risque qu'un événement significatif ou évènement redouté, intervienne et entrave le fonctionnement du système observé, en particulier d'un système industriel observé. Le risque est par exemple un risque de dysfonctionnement/anomalie d'un ou plusieurs sous-systèmes, allant jusqu'à la panne.

L'article « Learning about Risk : Machine learning for risk assessment », de N. Paltrinieri et al, publié dans Safety Science, vol. 118, 2019 indique que l'évaluation continue des risques joue un rôle crucial dans les secteurs industriels à forte composante de sécurité, dans lesquels l'apprentissage des leçons du retour d'expérience opérationnel, la dissémination des bonnes pratiques et le déploiement de techniques méthodes pour traiter et valoriser les données massives disponibles, doivent être associés à une capacité d'analyse prédictive et d'anticipation pour faire face aux événements inattendus et maîtriser les risques et incertitudes associées.

Une définition du risque a été donnée en 1981 par Kaplan et Garrick. Cette définition stipule que le risque (R) peut être exprimé par ce qui peut mal tourner (scénario s), la probabilité que cela se produise (probabilité p) et la gravité des conséquences (conséquence c) :

$$R = f(s, p, c)$$

Une des problématiques abordées dans l'état de la technique est la prise en considération des évolutions dynamiques vs l'analyse réalisée au moment de la conception fournissant une image statique du risque.

Plus récemment, une définition du risque prenant en outre en compte la connaissance k a été proposée :

$$R = f(s, p, c, k)$$

La vraisemblance d'un risque est l'estimation de la faisabilité ou de la probabilité qu'un risque se réalise, selon l'échelle adoptée (très faible, peu vraisemblable, quasi certain, etc).

Un risque a une signature de risque associée, qui est une fonction mathématique modélisant l'exposition au risque dans le temps. Il est possible de calculer un score du risque, qui caractérise une quantification du risque à un instant temporel donné. Le score est la valeur à l'instant t de la signature du risque.

L'invention a notamment pour but d'automatiser la détection précoce et la caractérisation de signaux faibles précurseurs à l'incubation d'évènements significatifs pour assurer la sûreté et la sécurité du système observé.

La question de la captation et de la caractérisation de signaux faibles, précurseurs d'un évènement significatif ou critique (également appelé « évènement redouté »), se pose de manière plus générale, dans le domaine industriel, dans le domaine de la surveillance de risque de catastrophes naturelles et également dans le domaine de la santé.

La notion de signaux faibles, précurseurs à l'incubation d'évènements redoutés, a été définie plus généralement, en particulier dans les sciences sociales. Il a été démontré *a posteriori* que toute défaillance aurait un signal précurseur nommé signal faible.

Une principale difficulté est la détection *a priori* et la caractérisation précoce de tels signaux faibles par rapport à des signaux aléatoires, qui sont qualifiés de bruits, les signaux faibles observables étant généralement eux-mêmes bruités dans une certaine mesure.

Diverses approches de détection et de caractérisation de signaux faibles ont été mises en oeuvre, notamment une approche symbolique et une approche numérique. L'approche symbolique s'appuie sur des modèles et des systèmes de raisonnement à base de règles, tentant de reproduire les mécanismes cognitifs d'un expert. Cette approche est limitée à des cas particuliers. L'approche numérique utilise des réseaux de neurones artificiels appliqués sur des données numériques, fondés sur des apprentissages automatiques. Cette approche peut s'avérer complexe, et permet notamment de réaliser des fouilles de données *a posteriori,* après l'occurrence d'un événement redouté. La détection en amont et *a priori* de signaux faibles demeure problématique.

EP 2 015 186 A2 décrit un système de diagnostic empirique de l'état d'un système surveillé. Les estimations des paramètres surveillés à partir d'un modèle du système fournissent des valeurs résiduelles qui peuvent être analysées pour la reconnaissance de la signature du mode de défaillance.

Le brevet FR 3009615 décrit un procédé et un système pour capter et caractériser des signaux faibles comparés à une valeur seuil donnée, un signal étant associé à une quantité d'énergie et émis par une ou plusieurs sources à surveiller au sein d'un système. Ce procédé met en oeuvre un calcul d'une signature traduisant une valeur d'énergie d'un signal détecté associé à un événement, en fonction d'une gravité G d'un évènement ayant impacté la source émettrice du signal, une probabilité d'occurrence de l'évènement et une fonction $M_R$ représentant la maîtrise du risque. La fonction de maîtrise du risque est pondérée par des paramètres représentant des moyens, des compétences et des méthodes déployées en prévention. Ce procédé permet de détecter des signaux faibles précurseurs d'un événement important (par exemple un dysfonctionnement) par comparaison à des seuils donnés.

L'invention a pour objet de proposer une méthode de caractérisation des signaux faibles améliorée par rapport à cette méthode de l'état de la technique, dans l'application au domaine industriel.

A cet effet, l'invention propose, selon un aspect, un procédé de détection et de caractérisation de signaux faibles d'exposition à un risque dans un système industriel, un signal faible étant représentatif d'une incubation d'un évènement redouté, à partir de données relatives au système industriel collectées par au moins un capteur sur une période temporelle donnée. Ce procédé comporte les étapes suivantes, mises en oeuvre par un processeur :

- à partir de données relatives audit système industriel, collectées pendant ladite période, calcul d'une signature prédictive du risque définissant une fonction d'incubation, la signature prédictive du risque comprenant un premier terme obtenu par sommation de signatures élémentaires associées à des événements initiateurs élémentaires, chaque signature élémentaire étant dépendante de paramètres comprenant une valeur de gravité de l'évènement initiateur élémentaire, une fonction caractéristique de l'évènement initiateur élémentaire et une fonction de pondération associée à l'événement initiateur élémentaire, au moins une partie desdits paramètres étant déterminés par mise en oeuvre d'un réseau de neurones,
- détection de présence d'au moins un signal faible d'exposition à un risque par comparaison de la signature prédictive du risque calculée à des signatures de risque de référence prédéterminées,
- en cas de détection positive, détermination d'une signature prédictive de référence associée à la signature prédictive du risque calculée et caractérisation du risque associé à ladite signature de risque de référence, ladite caractérisation comportant un affichage d'un scénario de menaces préalablement déterminé et enregistré en association avec ladite signature prédictive de référence.

Avantageusement, le procédé de détection et de caractérisation de signaux faibles d'exposition à un risque dans un système industriel met en oeuvre une signature prédictive du risque, calculée en fonction d'évènements initiateurs élémentaires, en prenant en compte des paramètres déterminés par mise en oeuvre de méthodes d'intelligence artificielle.

Avantageusement, l'approche proposée est une approche multi-modale combinant l'approche symbolique et l'approche numérique.

Le procédé de détection et de caractérisation de signaux faibles d'exposition à un risque selon l'invention peut également présenter une ou plusieurs des caractéristiques ci-dessous, prises indépendamment ou selon toutes les combinaisons techniquement envisageables.

La fonction de pondération associée à l'événement initiateur élémentaire est une fonction déterministe-probabiliste, dépendante d'une probabilité dudit événement initiateur élémentaire en lien avec ledit évènement redouté.

La signature prédictive du risque comporte un deuxième terme dépendant de paires d'évènements initiateurs élémentaires et d'une fonction caractéristique d'intercorrélation pour chaque paire d'évènements initiateurs élémentaires.

Le calcul d'une signature prédictive de risque prend en compte en outre une fonction probabiliste caractéristique de bruit relatif aux données collectées.

La signature élémentaire d'un événement initiateur élémentaire $E_i$ est fournie par la formule suivante :

$$Sig\_E_i(t) = f\big(G_i(x,t)\big)^n w_i(x,t)\sigma_i(x,t)$$

Où $f(Gi(x,t))^n$ est une fonction caractéristique de la gravité de l'évènement initiateur élémentaire $E_i$, définie sur un périmètre spatial et sur une période temporelle, n étant un paramètre entier,
$\sigma_i(x,t)$ est la fonction caractéristique de l'évènement initiateur élémentaire $E_i$ et $w_i(x,t)$ est la fonction de pondération associée à l'événement initiateur élémentaire $E_i$.

La signature prédictive du risque est calculée selon la formule :

$$\Gamma(t) = \left[ \sum_i Sig\_E_i(t) + \sum_{jk} \xi_{jk} w_j(x,t) w_k(x,t) < f\big(G_i(x,t)\big) \wedge f\big(G_j(x,t)\big) > \right] * B(t),$$

Où $\xi_{jk}$ est une fonction caractéristique d'intercorrélation entre évènements initiateurs élémentaires $E_j$ et $E_k$, $< f(G_i(x, t)) \wedge f(G_j(x, t)) >$ indique une fonction reliant les fonctions caractéristiques de gravité des évènements initiateurs $E_j$ et $E_k$, et $B(x,t)$ est une fonction probabiliste caractérisant un bruit.

La fonction caractéristique de gravité d'un événement initiateur élémentaire prend quatre valeurs différentes représentatives respectivement d'une gravité nulle, d'une gravité mineure, d'une gravité significative ou d'une gravité sévère.

Les données relatives au système industriel sont des valeurs représentatives d'équipements du système industriel, et la collecte de données est effectuée par un ou plusieurs capteurs.

Le procédé comporte, suite à la collecte de données relatives au système industriel pendant ladite période, un prétraitement desdites données collectées pour formater lesdites données collectées en données numériques, et une classification par un classifieur desdites données numériques pour obtenir des valeurs de paramètres associés aux évènements initiateurs élémentaires.

Le procédé comporte une phase d'initialisation d'une base de données des signatures de risque de référence, en lien avec un ensemble d'évènements redoutés, en fonction de données collectées pour des systèmes industriels et de validations d'experts, et une mémorisation des signatures de risque de référence, de scénarios de menaces associés et d'une cartographie de risques associée.

Selon un autre aspect, l'invention concerne un système de détection et de caractérisation de signaux faibles d'exposition à un risque dans un système industriel, un signal faible étant représentatif d'une incubation d'un évènement redouté, à partir de données relatives au système industriel collectées par au moins un capteur sur une période temporelle donnée. Ce système comporte au moins un système de calcul, comportant un processeur configuré pour mettre en oeuvre :

- à partir de données relatives au système industriel collectées pendant ladite période, un module de calcul d'une signature prédictive du risque, la signature prédictive du risque comprenant un premier terme obtenu par sommation de signatures élémentaires associées à des événements initiateurs élémentaires, chaque signature élémentaire étant dépendante de paramètres comprenant une valeur de gravité de l'évènement initiateur élémentaire, une fonction caractéristique de l'évènement initiateur élémentaire et une fonction de pondération associée à l'événement initiateur élémentaire, au moins une partie desdits paramètres étant déterminés par mise en oeuvre d'un réseau de neurones,
- un module de détection de présence d'au moins un signal faible d'exposition à un risque par comparaison de la signature prédictive du risque calculée à des signatures de risque de référence prédéterminées,

en cas de détection positive, application d'un module de détermination d'une signature prédictive de référence associée à la signature prédictive du risque calculée et de caractérisation du risque associé à la signature de risque de référence, comportant un module affichage d'un scénario de menaces préalablement déterminé et enregistré en association avec ladite signature prédictive de référence.

Selon un autre aspect, l'invention concerne un programme d'ordinateur comportant des instructions logicielles qui, lorsqu'elles sont mises en oeuvre par un dispositif électronique programmable, mettent en oeuvre un procédé de détection et de caractérisation de signaux faibles d'exposition à un risque tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 est un synoptique d'un dispositif de détection et de caractérisation de signaux faibles d'exposition à un risque dans un système industriel selon un mode de réalisation;

[Fig 2] la figure 2 est un synoptique des principales étapes d'une phase d'initialisation d'un procédé détection et de caractérisation de signaux faibles d'exposition à un risque, selon un mode de réalisation ;

[Fig 3] la figure 3 est un synoptique des principales étapes d'une phase de calcul de signature prédictive de risque dans un procédé de détection et de caractérisation de signaux faibles d'exposition à un risque, dans un mode de réalisation ;

[Fig 4] la figure 4 est un synoptique des principales étapes d'une phase de caractérisation de signaux faibles d'exposition à un risque dans un mode de réalisation ;

[Fig 5] la figure 5 illustre un exemple schématique de système industriel dans lequel l'invention trouve une application.

L'invention sera décrite ci-après dans des modes de réalisation, en particulier dans son application pour la détection et la caractérisation de signaux faibles d'exposition d'un système industriel à un risque de défaillance matérielle d'un de ses composants.

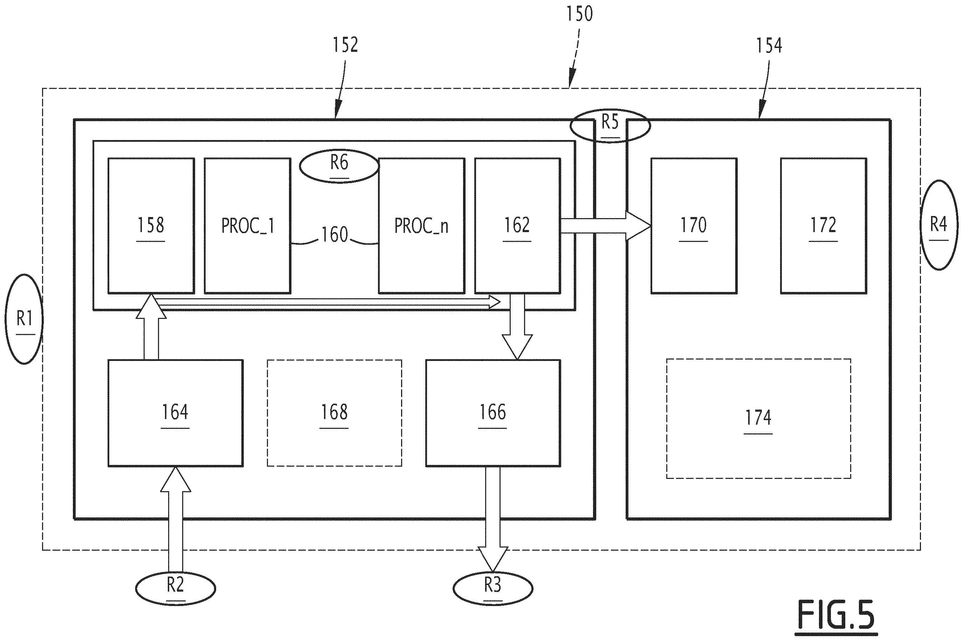

Un exemple d'application de l'invention dans le cadre d'un système industriel particulier, qui est une installation nucléaire, sera décrit ci-après en référence à la figure 5. Bien entendu, il s'agit d'un exemple non limitatif d'application de l'invention.

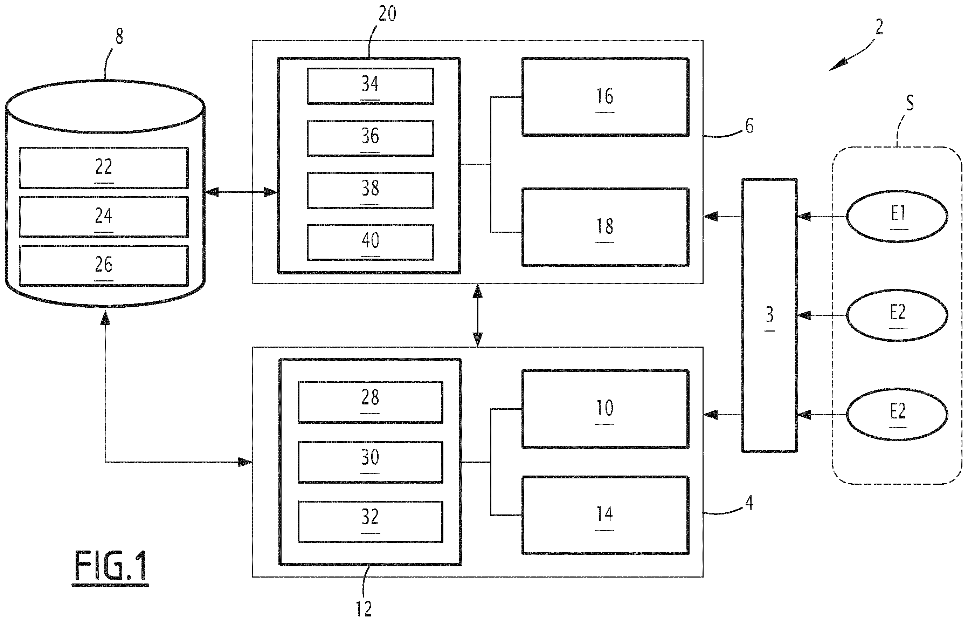

La **figure 1** illustre schématiquement un système 2 de détection et de caractérisation de signaux faibles d'exposition d'un système industriel à un risque.

Le système industriel observé, référence S à la figure 1, comporte plusieurs éléments qui sont des sources S1, S2, S3 qui sont émettrices de grandeurs physiques (e.g. remontée d'alarme, relevé de mesures de fonctionnement, écart ou anomalie, fait technique), qui sont captés par un ou plusieurs capteurs 3. Bien entendu, en pratique le nombre de sources émettrices observées est quelconque.

Ces grandeurs physiques prélevées forment des signaux mesurés, fonction du temps, qui sont susceptibles de contenir des signaux qui sont relatifs à des évènements initiateurs élémentaires relatifs à un risque redouté (dysfonctionnement, panne, surchauffe ou dépassement de valeurs de fonctionnement acceptables etc).

Ce système 2 comprend un premier système de calcul 4 et un deuxième système de calcul 6. Dans un mode de réalisation, chacun des systèmes de calcul 4, 6 est formé par un ou plusieurs dispositifs électroniques programmables, e.g. ordinateurs, adaptés pour effectuer des calculs.

Ces systèmes de calcul 4, 6 sont adaptés pour communiquer, en lecture et en écriture, avec un système de stockage de données 8, qui comprend des bases de données mémorisées sur une ou plusieurs unités de mémoire électroniques.

Le premier système de calcul 4 comporte une unité de calcul 10, composée d'un ou plusieurs processeurs, associée à une unité de mémoire électronique 12 et à une interface homme-machine 14.

Le deuxième système de calcul 6 comporte une unité de calcul 16, composée d'un ou plusieurs processeurs, associée à une unité de mémoire électronique 20 et à une interface homme-machine 18.

Le premier système de calcul 4 est configuré pour mettre en oeuvre une phase d'initialisation d'un procédé de détection et de caractérisation de signaux faibles d'exposition à un risque, en lien avec au moins un périmètre d'observation prédéfini, en particulier un périmètre spatial, comportant un ensemble de sources S1, S2, S3 observées, permettant de générer ou d'enrichir des bases de données comprenant :

- une base de données 22 d'évènements initiateurs élémentaires et de paramètres associés caractérisant des risques pour le périmètre prédéfini du système industriel ;
- une base 24 de signatures de risques de référence et de scénarios de menaces associés ;
- une cartographie de risques associée 26 est optionnellement mémorisée.

On entend ici par scénario de menaces associées à un risque, également appelé scénario de risque, un scénario complet d'évolution allant de la source du risque, e.g. un ou plusieurs évènements initiateurs élémentaires à son développement.

Un évènement initiateur élémentaire est caractérisé par un ou plusieurs paramètres sortant d'un intervalle de valeurs nominales, représentatif d'un signal faible précurseur du risque. Par exemple, il s'agit d'écarts par rapport à des valeurs nominales de fonctionnement, de remontées d'alarmes de type d'alarme prédéfini. Par exemple, il s'agit d'écarts mineurs, inférieurs à un seuil d'alerte, i.e. à une valeur de seuil donnée.

Par exemple un scénario menaces associé au risque décrit des évolutions temporelles, par exemple une fréquence de remontée d'alarme ou une courbe d'augmentation des écarts par rapport à des valeurs nominales de fonctionnement permettant de prédire un risque par exemple de surchauffe et d'incendie.

En d'autres termes, un scénario de menaces est un modèle cinétique du risque redouté, également appelé « modèle mécanistique ».

Une cartographie associée est une représentation visuelle, par exemple sous forme de diagramme 2D ou 3D, des risques pouvant affecter le système industriel S observé.

Ces bases de données 22, 24, 26 sont mémorisées par le système de stockage de données 8. Le système de stockage de données est un support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

L'unité de calcul 10 configurée(s) pour mettre en oeuvre un module 28 de sélection et validation de modèles de risque associé au périmètre d'observation, un module 30 de calcul de signatures de risque de référence, de scénarios de menaces associés et de cartographie de risque associée et un module 32 de validation de mise à jour.

Chaque risque est modélisé par un modèle multi-physique en fonction de données récoltées plusieurs systèmes industriels (par exemple, sur plusieurs sites d'installations nucléaires) sur une durée, ce modèle pouvant être mis à jour au fur et à mesure en fonction d'évènements observés, comme expliqué plus en détail ci-après.

Dans un mode de réalisation, pour un périmètre d'observation, plusieurs risques sont pris en considération, chaque risque ayant un modèle de risque associé, et un modèle de risque global, prenant en compte les interdépendances et les corrélations entre les risques, est obtenu.

Un exemple d'application dans une installation nucléaire sera détaillé ci-après en référence à la figure 5.

Le deuxième système de calcul 6 est configuré pour mettre en oeuvre un procédé de détection et de caractérisation de signaux faibles d'exposition à un risque pour le système industriel S.

L'unité de calcul 16 est configurée pour mettre en oeuvre :

- un module 34 de collecte de données relatives au système industriel pendant une période temporelle donnée, les données collectées comportant notamment des mesures obtenues par le ou les capteurs 3, à partir des sources émettrices S1, S2, S3 ;
- un module 36 de calcul d'une signature prédictive de risque ;
- un module 38 de détection de présence d'au moins un signal faible d'exposition à un risque par comparaison de la signature prédictive du risque à des signatures de risque de référence ;
- un module 40 de détermination d'une signature prédictive de référence associée à la signature prédictive du risque calculée et caractérisation de risque associé à la signature de risque de référence, ce module comportant également un module d'affichage de données sur l'interface homme-machine 18, notamment sur un écran d'affichage de cette interface.

Dans un mode de réalisation, les modules 34, 36, 38, 40 sont réalisés sous forme de code logiciel, et forment un programme d'ordinateur, comportant des instructions logicielles qui, lorsqu'elles sont mises en oeuvre par un dispositif électronique programmable, mettent en oeuvre un procédé de détection et de caractérisation de signaux faibles d'exposition à un risque.

En variante non représentée, les modules 34, 36, 38, 40 sont réalisés chacun sous forme d'un composant logique programmable, tel qu'un FPGA (de l'anglais *Field Programmable Gate Array*), ou un GPGPU (de l'anglais *General-purpose processing on graphies processing*), ou encore sous forme d'un circuit intégré dédié, tel qu'un ASIC (de l'anglais *Application Spécifie Integrated Circuit*).

Le programme d'ordinateur de détection et de caractérisation de signaux faibles d'exposition à un risque est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

De manière analogue, les modules 28, 30, 32 sont réalisés sous forme de code logiciel, et forment un programme d'ordinateur. En variante non représentée, les modules 28, 30, 32 sont réalisés chacun sous forme d'un composant logique programmable, tel qu'un FPGA (de l'anglais *Field Programmable Gate Array*), ou un GPGPU (de l'anglais *General-purpose processing on graphies processing*), ou encore sous forme d'un circuit intégré dédié, tel qu'un ASIC (de l'anglais *Application Spécifie Integrated Circuit*).

Le premier système de calcul 4 et le deuxième système de calcul 6 ont été représentés ici sous forme de systèmes de calcul distincts.

Dans une variante non représentée, les deux systèmes de calcul 4, 6 sont réunis en un seul système de calcul, qui effectue à la fois la phase d'initialisation pour un périmètre d'observation du système industriel et la phase de traitement des données collectées pour le système industriel pour la caractérisation et la prédiction de signaux faibles d'exposition à un risque.

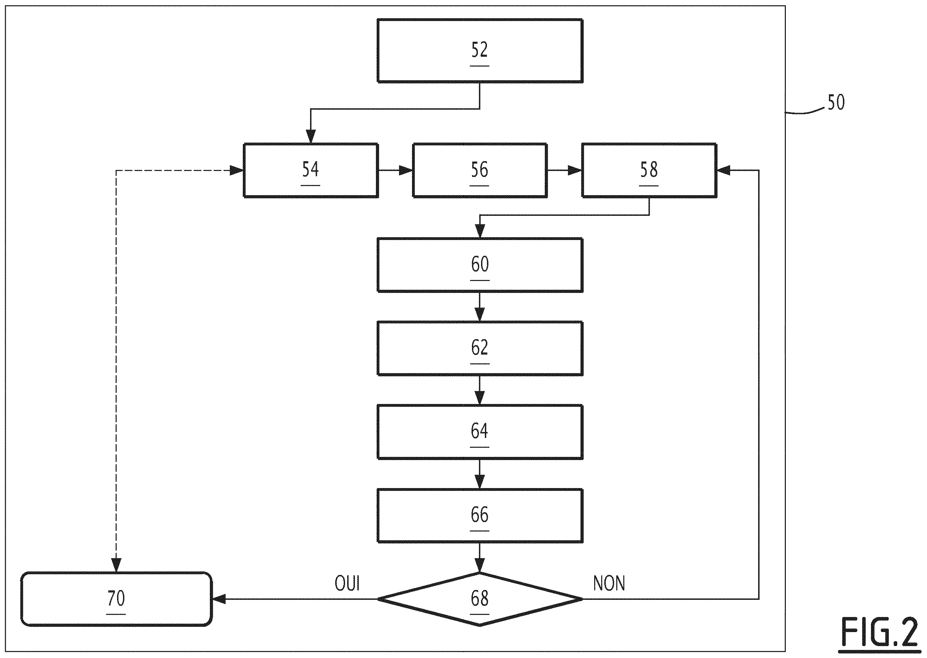

La **figure 2** est un synoptique des principales étapes d'une phase d'initialisation 50 d'un procédé de détection et de caractérisation de signaux faibles d'exposition à un risque, dans un mode de réalisation.

Cette phase d'initialisation est une phase préalable à la mise en oeuvre du procédé pour un système industriel observé, dans un périmètre d'observation comportant une pluralité de sources émettrices, et elle a pour objectif de générer et mémoriser les informations :

- de la base de données 22 d'évènements initiateurs élémentaires et de paramètres associés caractérisant des risques pour le système industriel;
- de la base 24 de signatures de risques de référence et de scénarios de menaces associés ;

- de la cartographie de risques associée 26.

Avantageusement, la phase d'initialisation est effectuée, en lien avec le périmètre d'observation et avec un ensemble de risques prédéfini, en fonction de données collectés sur un ou plusieurs systèmes industriels de même types, collectées pendant des phases de fonctionnement de ces systèmes et de validations d'experts.

Par exemple, la phase d'initialisation 50 est menée par un expert qui est un professionnel de la sûreté de fonctionnement du système industriel choisi.

Par exemple, la phase d'initialisation met en oeuvre un schéma de retour d'expérience ou REX, après analyse de données enregistrées avant la survenue d'accidents dans des systèmes industriels.

Dans un mode de réalisation, la phase d'initialisation est menée par un expert de la sûreté de fonctionnement qui utilise une interface homme-machine (e.g. écran et clavier, écran tactile, interface de commande vocale...) lui permettant de sélectionner un périmètre d'observation et un ensemble de risques redoutés.

Le procédé comprend ensuite une sélection 54 de données collectées préalablement, par exemple préalablement mémorisées dans une ou plusieurs bases de données, relatives aux données collectés en lien avec le ou les risques redoutés.

De plus, l'expert a la possibilité de sélectionner à l'étape 56 des modèles et algorithmes d'apprentissage par intelligence artificielle (IA), à déployer dans le procédé, parmi plusieurs tels modèles et algorithmes proposés, par exemple à partir d'évaluations de performance issues d'un retour d'expérience opérationnel ou de la littérature scientifique. Par exemple, il est possible d'utiliser des algorithmes d'apprentissage profond mettant en oeuvre des réseaux de neurones artificiels, de manière automatisée, parmi :

- apprentissage supervisé basé sur des réseaux de neurones convolutifs (CNN), comprenant plusieurs couches, qui sont, en option, entièrement connectées ;
- apprentissage semi-supervisé basé par exemple sur des réseaux de neurones profonds (DNN) ;
- apprentissage non-supervisé basé par exemple sur des réseaux de neurones récurrents (RNN) à mémoire longue et courte (ou LSTM pour « long short-term memory » en anglais), comprenant une ou plusieurs couches LSTM.

Le procédé comprend également une étape 58 d'obtention de modèles multi-physiques du risque s'ils pour le ou les risque à investiguer.

On appelle ici modèle multi-physique du risque un modèle intégrant plusieurs paramètres permettant de caractériser le risque, qui sont quantifiables, par exemple des écarts par rapport à des valeurs nominales de fonctionnement et des remontées d'alarmes.

Un tel modèle définit des évènements initiateurs élémentaires du risque dont l'utilisation est décrite plus en détail ci-après.

L'étape d'obtention 58 est par exemple mise en oeuvre par mise en oeuvre d'un algorithme d'intelligence artificielle parmi les algorithmes mentionnés ci-dessus, entraîné dans la phase d'apprentissage sur les données collectées à l'étape de sélection 54.

Selon un mode de réalisation, l'étape d'obtention 58 effectue une sélection parmi des modèles fournis par des experts, la sélection étant par exemple effectuée sur un critère de performance choisi.

Selon une variante, l'étape d'obtention 58 effectue une construction d'un modèle de risque à partir des données collectées à l'étape 54.

Le procédé comprend également, de préférence, une étape 60 de validation par interaction avec l'expert, permettant une validation incrémentale des résultats intermédiaires, permettant par exemple d'affiner et de renforcer l'apprentissage.

Par exemple, dans un mode de réalisation, l'étape 60 est réalisée par un module de questions/réponses (ou QA de « questions and answers » en anglais), par exemple mis en oeuvre sous forme d'un agent conversationnel (ou « chatbot » en anglais). Une telle étape 60 de validation par interaction fait partie d'un processus de type HILL (pour « human in the loop learning » en anglais), qui permet d'améliorer les résultats obtenus automatiquement par un apprentissage machine.

Le procédé comprend également une étape 62 de couplage multi-échelle de modèles multi-physiques du risque et des incertitudes associées, permettant d'obtenir des paramètres associés à des évènements initiateurs élémentaires, permettant de calculer une signature prédictive de risque, formée à partir signatures dites signatures élémentaires d'évènements initiateurs élémentaires, comme détaillé ci-dessous.

Le couplage multi-échelle est mis en oeuvre par le modèle d'intelligence artificielle sélectionné à l'étape de sélection 56.

On entend ici par couplage multi-échelle la prise en compte de périmètres spatiaux définis à plusieurs échelles. Par exemple, pour un site industriel, par exemple un site nucléaire, les périmètres spatiaux à différentes échelles comprennent l'installation dans son ensemble à une première échelle, un bâtiment spécifique à une deuxième échelle, un ensemble de pièces à accès restreint enfermant du matériel dont la sécurité est critique à une troisième échelle etc. Un exemple concret relatif à un système industriel sera détaillé ci-après en référence à la figure 5.

Pour chaque échelle un modèle est défini, et le couplage multi-échelle prend en considération les interactions entre échelles, par exemple en partant du niveau le plus élémentaire (correspondant à la Nième échelle, N étant le nombre total d'échelles dans la notation choisie ci-dessus), et en pondérant la contribution d'un niveau d'échelle n à un niveau d'échelle n-1.

On entend ici par incertitude associée au modèle est une incertitude probabiliste, calculée par une méthode de calcul probabiliste par rapport aux données collectées.

En effet, les données collectées sont généralement biaisées voire bruitées à la source compte-tenu des incertitudes associées aux systèmes et procédés d'acquisition des données à la source, de leur traitement et de leur sauvegarde.

Les modèles mathématiques utilisés génèrent également des incertitudes supplémentaires liées aux écarts entre le modèle réel décrivant la mécanistique et la phénoménologie de l'exposition aux risques et les approximations déployées en fonction des données disponibles.

Pour évaluer cette incertitude, plusieurs méthodes sont décrites par l'état de l'art. En témoigne, l'utilisation d'une loi de probabilité, comme la loi de Poisson qui s'applique à l'apparition d'événements de faibles probabilité ou bien la loi de Gauss (ou loi normale) qui est la loi de probabilité la plus utilisée. Son intérêt est confirmé si les conditions suivantes sont réalisées simultanément :

- Les causes d'erreur sont nombreuses ;
- Les erreurs sont du même ordre de grandeur ;

Les fluctuations liées aux différentes causes d'erreur sont indépendantes et additives.

Le procédé comprend en outre une étape 64 de calcul de cartographie du risque et de modélisation déterministe-probabiliste du risque et des menaces associées.

La modélisation déterministe-probabiliste comprend la prise en compte de paramètres déterministes (par exemple vétusté d'équipements du système industriel, date de mise en fonctionnement d'une machine, fréquence d'utilisation d'une machine, conditions de fonctionnement (température ambiante, hygrométrie)), qui modifient les calculs d'incertitude probabiliste associées au risque.

Pour un risque considéré, on applique une classification par réseaux de neurones ou par forêts aléatoires en plusieurs classes en fonction de la modélisation déterministe-probabiliste et pour chaque classe, on calcule une signature de risque de référence qui est mémorisée dans la base de données 24, ainsi qu'un scénario de menaces associé.

La signature élémentaire d'un événement initiateur élémentaire $E_i$ est définie par la formule suivante :

[MATH 1]

$$Sig\_E_i(t) = f\big(G_i(x,t)\big)^n w_i(x,t)\sigma_i(x,t)$$

où $f(G_i(x,t))^n$ est la fonction caractéristique de la gravité de l'évènement initiateur élémentaire $E_i$, n étant un paramètre, de préférence compris entre 1/2 et 5/2 inclus, définie sur un périmètre spatial Per_s=[$x, x + \Delta x$] et sur une période temporelle Per_t= [$\tau, \tau + \Delta \tau$] ;
$f(X)$ est une fonction d'une variable X, par exemple :

$f(X) = 2^X$ ou
$f(X) = X^n$, n étant un réel, ou

$$f(X) = Xe^{-X^2}$$

$\sigma_i(x, t)$ est la fonction caractéristique de l'évènement initiateur élémentaire $E_i$ et $w_i(x, t)$ est la fonction de pondération associée à l'événement initiateur élémentaire $E_i$.

Par exemple, la fonction caractérisante de la gravité est une fonction de l'évènement initiateur élémentaire.

Dans un mode de réalisation, la fonction caractéristique de la gravité peut prendre quatre valeurs différentes représentatives respectivement d'une gravité nulle, d'une gravité mineure, d'une gravité significative ou d'une gravité sévère, pour une valeur x du périmètre choisi et un instant t :

$$G_i(x,t) = \begin{cases} \lambda_1^i \\ \lambda_2^i \\ \lambda_3^i \\ \lambda_4^i \end{cases}$$

Où $\lambda_k^i$ est la kème valeur de gravité pour l'évènement initiateur élémentaire $E_i$.

Par exemple, $\lambda_1^i = 0$ pour gravité nulle, $\lambda_2^i = 1$ pour gravité mineure, $\lambda_3^i = 2$ pour gravité significative et $\lambda_4^i = 3$ pour gravité sévère.

La fonction caractéristique d'un événement initiateur élémentaire $E_i$ prend par exemple les valeurs 0 ou 1, en fonction de l'état de réalisation de l'évènement :

$\sigma_i(x, t)$ = 1 si $E_i$ s'est réalisé
$\sigma_i(x, t)$ = 0 sinon.

La fonction de pondération $w_i(x, t)$ est par exemple un paramètre fixé par un expert ou une fonction déterministe-probabiliste associée à un évènement initiateur élémentaire $E_i$, caractérisé par une gravité $G_i(x,t)$, et une probabilité $p_i$.

Par exemple, une formule de la pondération est :

[MATH 2]

$$w_i = p_i * \frac{\prod_k V_{ik}}{\left(\sum_k \Psi_{ik}^m\right)^{\frac{1}{n}}}$$

Où $V_{ik}$ est une valeur représentative d'une vulnérabilité intrinsèque au système industriel S relativement et $\Psi_{ik}$ une caractéristique de barrière de défense associée.

Dans un mode de réalisation, la signature prédictive de risque est calculée selon la formule suivante qui fournit $\Gamma(t)$, également appelée fonction d'incubation.

La fonction d'incubation est une fonction mathématique multivariable, dépendant de plusieurs types de variables temporelles, spatiales, quantitatives et/ou qualitatives.

La fonction d'incubation est définie ci-dessous à partir signatures caractéristiques d'événements élémentaires, sur un périmètre spatial et une période temporelle tels qu'indiqués ci-dessus.

$\Gamma(t) = [\Sigma_i\, f(G_i(x, t))w_i(x, t)\sigma_i(x, t) + \Sigma_{jk}\, \xi_{jk}\, w_\varphi(x, t)\, w_k(x, t) < f(G_i(x, t)) \wedge f(G_j(x, t)) >] * B(t)$ [MATH 3]

Où:

- $f(Gi(x,t))$ est la fonction caractéristique de la gravité de l'évènement initiateur élémentaire $E_i$,
- $\sigma_i(x, t)$ est la fonction caractéristique de l'évènement initiateur élémentaire $E_i$,
- $w_i(x, t)$ est la fonction de pondération associée à l'événement initiateur élémentaire $E_i$ ;
- $\xi_{jk}(x, t)$ est une fonction caractéristique d'intercorrélation entre évènements initiateurs élémentaires $E_j$ et $E_k$, et $B(x,t)$ est une fonction probabiliste caractérisant un bruit,
- la notation $< f(G_i(x, t)) \wedge f(G_j(x, t)) >$ indique une fonction reliant les fonctions caractéristiques de gravité des évènements initiateurs Ei et Ej, par exemple :

$$< f\left(G_i(x,t)\right) \wedge f\left(G_j(x,t)\right) > = f(G_i(x,t)) \times f(G_j(x,t))$$

La fonction caractéristique d'intercorrélation entre deux évènements initiateur élémentaire peut s'écrire :

$$\xi_{jk} = \langle \sigma_j | \sigma_k \rangle$$

Par exemple :

$\xi_{jk}$ = 1 si la corrélation des évènements initiateurs élémentaires $E_j$ et $E_k$ apporte un effet négatif aggravant ;
$\xi_{jk}$ = 0 si la corrélation des évènements initiateurs élémentaires $E_j$ et $E_k$ n'apporte aucun effet, en d'autres termes est neutre;
$\xi_{jk}$ = -1 si la corrélation des évènements initiateurs élémentaires $E_j$ et $E_k$ apporte un effet positif protecteur.

Plus généralement, si la corrélation des évènements initiateurs élémentaires $E_j$ et $E_k$ apporte un effet négatif aggravant prend une première valeur de corrélation, de préférence une valeur positive, si la corrélation des évènements initiateurs élémentaires $E_j$ et $E_k$ apporte un effet positif protecteur, prend une deuxième valeur de corrélation, de préférence négative.

Le signal faible est défini par le terme source $\Omega$ caractérisant la dérive de l'incubation sur le sur périmètre spatial Per_s et la période temporelle Per_t :

[MATH 4]

$$\Omega(x,t) = \frac{\partial \Gamma}{\partial t} + \frac{\partial^2 \Gamma}{\partial^2 x}$$

Il est de plus possible, selon une variante, de prendre en compte une ou plusieurs autres variables Xi, spécifiques au système surveillé, qui forment une contrainte supplémentaire :

[MATH 5]

$$\Omega(x,t) = \frac{\partial \Gamma}{\partial t} + \frac{\partial^2 \Gamma}{\partial^2 x} + \frac{\partial \Gamma}{\partial X_i}$$

Selon une variante, plusieurs variables sont prises en considération, pondérées par des paramètres $\beta_i$ caractérisant « l'importance » de chaque variable :

[MATH 6]

$$\Omega(x,t) = \frac{\partial \Gamma}{\partial t} + \frac{\partial^2 \Gamma}{\partial^2 x} + \sum \beta_i \frac{\partial \Gamma}{\partial X_i}$$

Par exemple, les paramètres $\beta_i$ sont croissants avec l'importance, i.e. la contribution, de chaque variable dans le scénario de menaces considéré.

Les paramètres $\beta_i$ sont par exemple des valeur réelles de pondération, positives et inférieures à 1 dont la somme totale est normalisée à 100%.

Le bruit B(x,t) peut être filtré grâce à l'implémentation de fonctions mathématiques connues, ce qui permet d'obtenir une fonction d'incubation filtrée notée :

[MATH 7]

$$\hat{\Gamma}(t) = \left[ \sum_i f(G_i(x,t)) w_i(x,t) \sigma_i(x,t) + \sum_{jk} \xi_{jk} w_j(x,t) w_k(x,t) < f(G_i(x,t)) \wedge \right.$$

$$\left. f(G_j(x,t)) > \right]$$

La caractérisation des facteurs de pondération $w_i(x,t)$ s'effectue de préférence par apprentissage IA (« intelligence artificielle ») par renforcement pour accroître la précision et la personnalisation des événements initiateurs élémentaires.

Le procédé comprend, optionnellement, une autre étape 66 de validation interactive par un expert, analogue à l'étape 60 décrite ci-dessus.

L'expert valide notamment les résultats des étapes 62 et 64.

En cas de validation positive (réponse 'oui' au test 68), la base de données 22 d'évènements initiateurs élémentaires et de paramètres associés caractérisant des risques pour le périmètre prédéfini, la base 24 de signatures de risques de référence et de scénarios de menaces associés et la cartographie de risques associée 26 sont mises à jour (étape 70) avec les résultats des étapes 62 et 64.

En cas de validation négative (réponse 'non' au test 68), le procédé retourne à l'étape 58 de sélection de modèles multi-physiques du risque, et les étapes 60 à 68 sont itérées.

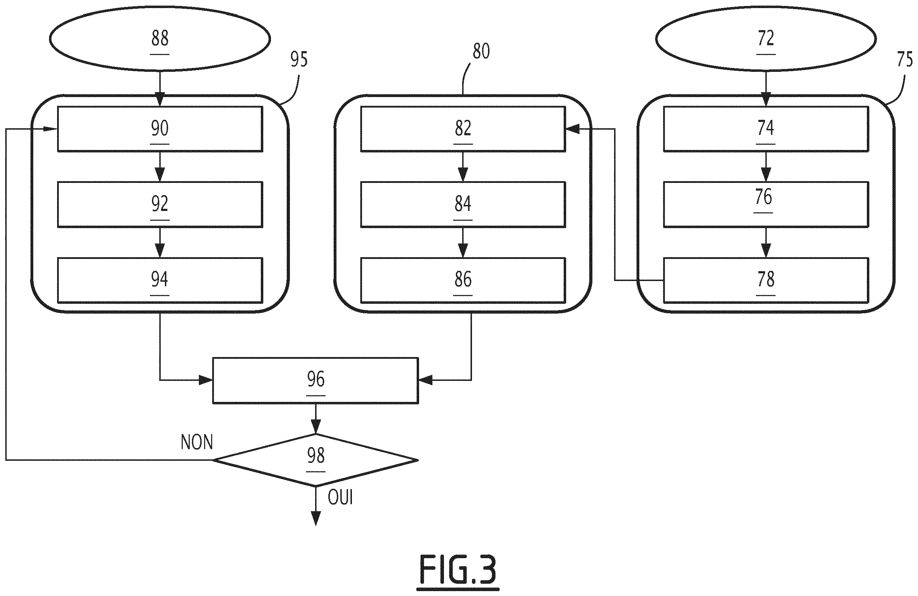

La **figure 3** est un synoptique des principales étapes d'une phase de calcul et d'évaluation de signature de risque dans le procédé de détection et de caractérisation de signaux faibles d'exposition à un risque dans un système industriel observé, dans un mode de réalisation.

Le procédé reçoit en entrée des données 72 relatives au système industriel observé, selon un périmètre spatial d'observation, collectées par un ou plusieurs capteurs, pendant une période temporelle donnée, dite période de surveillance, par exemple une semaine, 15 jours, un mois.

Les données 72 relatives au système industriel peuvent également comprendre des données descriptives du périmètre spatial d'observation, par exemple des données historiques comme la date de mise en fonctionnement de chaque équipement ou machine observée, la fréquence d'utilisation de la machine, des données de contexte (température, hygrométrie, présence de substances corrosives etc).

Ces données 72 sont collectées lors d'une étape de collecte 74, par exemple sous forme de fichiers qui contiennent ces données et/ou par saisie par un opérateur. Ces données 72 collectées sont appelées données brutes.

Les données brutes sont prétraitées lors d'une étape de prétraitement 76, ce prétraitement consistant à formater, ou en d'autres termes à structurer et à traduire, les données brutes en données numériques exploitables par la suite par des algorithmes de traitement automatiques. L'étape de prétraitement est réalisée par un traitement automatique sur la base de règles prédéterminé.

Ensuite le procédé comporte une étape 78 de classification des données numériques obtenues à l'étape 76 par une méthode d'intelligence artificielle. Par exemple l'étape 78 applique un classifieur, implémenté par un algorithme d'intelligence artificielle, tel un réseau de neurones, ou un arbre de décision ou un réseau de forêts, entraînés dans une phase d'apprentissage préalable.

En sortie de cette étape 78 de classification des données sont obtenues les paramètres définissant les évènements initiateurs élémentaires et les valeurs de gravité, de pondération associées.

Les événements initiateurs élémentaires associés au risque que l'on cherche à caractériser sont définis par le modèle du risque calculé et mémorisé lors de la phase d'initialisation 50.

Les étapes 74, 76 et 78 contribuent à un prétraitement 75 des données 72 relatives au système industriel qui sont collectées.

Ce prétraitement 75 est suivi d'une évaluation prédictive 80 du risque de survenue d'un événement redouté.

Cette évaluation prédictive comprend un calcul 82 de signature prédictive du risque redouté en utilisant la formule [MATH 3] ou [MATH 7] dans un mode de réalisation.

Le procédé comporte ensuite une étape 84 d'évaluation statistique d'incertitudes associées à la signature prédictive du risque calculée, cette évaluation prenant en compte des incertitudes associées aux données, modèles et algorithmes.

Cette évaluation statistique d'incertitudes est effectuée par une méthode de calcul statistique, par exemple en implémentant une loi normale ou bien une loi de Poisson selon une des méthodes connues dans l'état de l'art.

Le procédé comprend en outre une étape 86 d'évaluation temporelle de la fonction d'incubation ou signature prédictive du risque, selon la formule [MATH 3] ou [MATH 7], sur la période de surveillance, avec une fréquence temporelle choisie. Ainsi, un échantillonnage temporel de la fonction d'incubation prédictive du risque (ou signature prédictive du risque) est obtenu, sur une durée temporelle donnée, formant une courbe d'évolution du risque. La durée temporelle est par exemple d'une ou plusieurs semaines ou mois.

Dans le mode de réalisation décrit, sensiblement en parallèle de l'évaluation prédictive 80 du risque pour le système industriel considéré, est mise en oeuvre une évaluation parallèle 95 à partir de données 88 mémorisées, également appelées données de retour d'expérience ou REX.

L'évaluation 95 effectuée à partir a pour objectif de permettre une mise à jour interactive des modèles mémorisés dans les bases de données 22, 24 en fonction des données collectées, permettant ainsi d'affiner les modèles de risque, les signatures de risque de référence et des scénarios de menaces associés.

En plus, cette évaluation permet de mettre en lumière des scénarios rares, mais néanmoins possibles, ayant une très faible probabilité d'occurrence mais correspondant à un scénario redouté pour le système industriel.

L'évaluation 95 comprend une étape 90 d'obtention d'une signature de risque de référence et de modèle mécanistique du risque associé. La signature de risque de référence est la plus proche du modèle calculé pour le système industriel considéré, à partir des données 88 mémorisées, notamment à partir des bases de données 22, 24.

Ensuite, lors d'une étape 92, une prédiction de l'évolution du risque pour système industriel est calculée, sur la même durée temporelle que celle utilisée à l'étape 84, en utilisant la signature du risque de référence obtenue à l'étape 90.

Une étape 94 de d'évaluation déterministe-probabiliste de la signature du risque de référence appliquée et du scénario de menaces redouté associé est mise en oeuvre par des méthodes mathématiques du plus proche voisin par exemple

Une étape 96 (optionnelle) de validation par interaction avec un expert, faisant partie d'un processus de type HILL (pour « human in the loop learning » en anglais), est ensuite mise en oeuvre, et si le résultat de la validation (test 98) est négatif, une modification de la signature de risque de référence dans la base de données est appliquée, par apprentissage par renforcement et les étapes 90, 92 et 94 sont itérées.

La validation comprend notamment la comparaison entre la signature de risque de référence et la signature de risque obtenue pour le système industriel considéré.

L'expert valide alors les données de référence mémorisées dans les bases de données 22, 24.

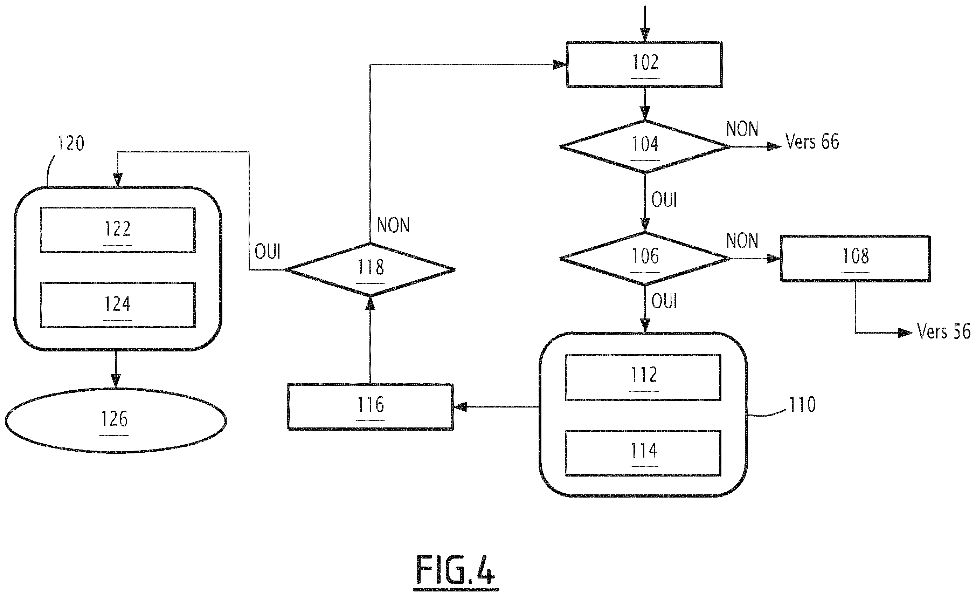

Si le résultat de la validation est positif, le procédé continue vers une phase finale 100 de détection et caractérisation dans le procédé de détection et de caractérisation de signaux faibles d'exposition à un risque, la continuation étant décrite ci-après en référence à la **figure 4.**

Cette phase finale de détection et caractérisation comprend une étape 102 de mise en oeuvre d'un module de caractérisation de signaux faibles d'exposition à un risque (ou signaux faibles précurseurs), qui effectue une comparaison de la signature prédictive du risque calculée, ou des signatures prédictives du risque calculées à plusieurs instants temporels à une signature de risque de référence prédéterminée.

Dans un mode de réalisation, la signature de risque de référence est une valeur de seuil, et une comparaison à la valeur de seuil est effectuée, et la détection de signaux faibles précurseurs est positive si la valeur de seuil prédéterminée est dépassée par la signature prédictive du risque calculée à au moins un instant t de la période considérée. Plusieurs valeurs de seuils définissant plusieurs niveaux de risque peuvent être utilisées, ces valeurs de seuils étant préalablement mémorisées.

Dans un autre mode de réalisation, l'étape 102 met en oeuvre une comparaison à une ou à des signatures de risque de référence préalablement calculées et mémorisées dans la base de données 24 de signatures de risques de référence, et la détection de signaux faibles précurseurs est positive si une distance entre signatures de risque de référence et signature prédictive du risque calculée est inférieure à un seuil de distance prédéterminé. Par exemple, chacune des signatures de risque est caractérisée par une pluralité de valeurs à des instants temporels successifs sur une durée temporelle d'évaluation des signatures de risque. Le calcul d'une distance entre signatures de risque met en oeuvre dans ce cas une distance entre deux courbes, par exemple la moyenne pondérée des distances point à point.

De plus, une incertitude statistique associée à la détection est évaluée systématiquement par l'une des méthodes statistiques de l'état de l'art (loi normale ou loi de Poisson).

En cas de détection de signaux faibles précurseurs négative (réponse « non » au test 104), le procédé retourne à l'étape 66 de validation interactive par un expert.

En cas de détection de signaux faibles précurseurs positive (réponse oui au test 104), il est ensuite vérifié (test 106) s'il existe une signature de risque de référence proche de la signature prédictive du risque parmi les signatures de risque de référence préalablement mémorisées.

La proximité est évaluée en fonction d'un calcul de distance selon une mesure de distance prédéterminée.

Par exemple comme indiqué ci-dessus en référence à l'étape 102, une distance entre deux courbes, respectivement une courbe représentative d'une signature de risque de référence et une courbe représentative de la signature prédictive de risque calculée, est calculée, ce qui permet de trouver la signature de risque de référence la plus proche de la signature prédictive du risque calculée. Ensuite la distance entre la signature de risque de référence la plus proche de la signature prédictive du risque calculée et la signature prédictive du risque calculée est comparée à un seuil de distance, et si elle est inférieure à ce seuil de distance, alors la réponse au test 106 est positive.

En cas, de réponse négative au test 106, une étape 108 de validation interactive par un expert est mise en oeuvre, suivie de l'étape 56 de sélection de modèles d'apprentissage par intelligence artificielle. Dans ce cas, le processus d'apprentissage est relancé avec un nouveau modèle d'apprentissage, par exemple les paramètres du modèle sont modifiés, ou un autre algorithme d'apprentissage est choisi.

En cas de réponse positive au test 106, en d'autres termes si une signature de risque de référence proche de la signature prédictive du risque a été trouvée, une étape 110 d'affichage est mise en oeuvre. Elle comporte un affichage 112 d'une simulation prédictive du risque de survenue de l'évènement redouté et une étape 114 d'affichage des caractéristiques des modèles d'IA utilisés.

Une nouvelle étape 116 de validation interactive par un expert est optionnellement mise en oeuvre.

En cas de validation négative (réponse « non » au test 118), le procédé retourne à l'étape 102 de comparaison à une ou à des signatures de risque de référence.

En cas de validation positive (réponse « oui » au test 118), une étape 120 de génération de rapport est mise en oeuvre, en utilisant (étape 122) des données des bases de données préalablement mémorisées, en particulier en utilisant les scénarios de menaces associés et la cartographie de risques associée.

Ainsi, la base de données REX est enrichie.

En particulier, le scénario de menaces associé à la signature de risque de référence sélectionnée est affiché. De plus, les paramètres caractérisant le modèle de risque appliqué sont affichés, ainsi que les incertitudes probabilistes calculées.

En complément optionnel, un plan de propositions et de recommandations est généré (étape 124).

Par exemple, des recommandations de surveillance ou de mise à l'arrêt de certains équipements du système industriel, ou d'application de maintenance prédictive sont mises en oeuvre.

Ainsi, un rapport 126 est obtenu, ce rapport permettant une prise de décision informée du risque détecté, suite à la détection et à la caractérisation de signaux faibles précurseurs.

Un exemple d'application dans un système industriel d'installation nucléaire sera décrit ci-dessous en référence à la figure 5.

Un site d'installation nucléaire 150 est schématiquement représenté dans la figure 5.

Le site d'installation nucléaire 150 comprend deux bâtiments 152, 154, le premier bâtiment 152 abritant une installation nucléaire, le deuxième bâtiment 154 comportant des bureaux de personnels. L'installation 150 est détentrice de matières nucléaires au titre de la réglementation applicable aux matières nucléaires.

Dans cet exemple d'application, le bâtiment 152 comprend des zones de différents niveaux d'accès, respectivement accès autorisé à l'ensemble du personnel ayant un premier niveau d'habilitation, accès réglementé autorisé à des personnes ayant un deuxième niveau d'habilitation, et accès restreint aux personnes ayant un troisième niveau d'habilitation.

Le bâtiment 152 abrite une zone 156 à accès réglementé, qui elle-même comprend une cellule de stockage de matières brutes 158 (zone à accès restreint), les zones 160 de mise en oeuvre de procédés de transformation de matières nucléaires, visant à obtenir une pièce ou un objet à partir de la matière brute, comme la fonderie, la forge, la presse, l'usinage, l'emboutissage, le soudage, la fabrication additive ou une combinaison de ces procédés, référencés PROC_1 à PROC_n. Les objets finis sont entreposés dans une cellule 162 distincte à accès restreint.

De manière schématique, ces procédés industriels PROC_i, abrités chacun dans une cellule 160 distincte contenant des appareils de pesée et des ordinateurs pour la saisie des données, se succèdent dans la chaîne de production industrielle, selon un processus industriel, qualifié et évalué au titre de l'assurance qualité, permettant le passage, à la fin de chaque étape validée, d'un procédé au suivant PROC_i+1.

Les flèches illustrées à la figure 5 indiquent les flux d'entrée, de sortie et de transformation.

Le bâtiment 152 abritent également des zones 164, 166, 168, qui sont respectivement une zone d'entrée 164 à accès réglementé, dans laquelle s'effectuent l'arrivée, le déchargement et le transfert des matières premières, une zone de sortie 166 de sortie, dans laquelle s'effectuent le transfert de sortie et le chargement d'objets finis, et une zone 168 d'accès autorisé aux personnels (vestiaires, bureaux, salles de réunion etc).

Le bâtiment 154, distinct du bâtiment 152 abritant les installations industrielles, abrite une cellule 170 à accès restreint, de stockage de données sensibles permettant un contrôle de fonctionnement du site industriel, et des bureaux 172 de personnels habilités à niveau d'accès réglementé. Le bâtiment 154 comprend également une zone 174 d'accès autorisé aux personnels (bureaux, salles de réunion etc).

Pour assurer la sûreté de fonctionnement, une responsabilité opérationnelle est attribuée à un chef d'installation (le terme « chef » désignant ici toutes les personnes en responsabilité, par exemple une personne responsable et un suppléant), qui effectuent des contrôles sur l'ensemble de l'installation 156. De plus, chaque procédé industriel PROC_k est sous la responsabilité d'un chef d'équipe.

Le contrôle de qualité de premier niveau est effectué par les personnes responsables au niveau de l'installation 156, ainsi que des zones d'entrée 164 et de sortie 166. Ce contrôle vise à garantir d'une part, la qualité de la production industrielle au titre de l'assurance qualité, et d'autre part, la conformité réglementaire des processus industriels en termes de détention des matières nucléaires (suivi, comptabilité et protection physique des matières), de sécurité de l'installation et des personnes (protection physique de l'installation, risques professionnels, risque incendie, risque de malveillance interne et de détournement...), et de protection de l'environnement (contrôle de la maîtrise des rejets et prévention/gestion des risques et des menaces internes et externes).

Au titre de la réglementation applicable, un contrôle de second niveau est effectué par une cellule dite de contrôle de second niveau, en charge du contrôle de l'ensemble des installations d'un site ou d'une usine. Cette cellule qui relève de la direction générale du site ou de l'usine, est généralement située dans un bâtiment administratif (bâtiment B), distinct des bâtiments abritant des installations industrielles. Elle enregistre, contrôle et stocke l'ensemble des informations sensibles et données numériques, quantitatives et qualitatives, relatives à l'ensemble des installations et à chacun des procédés.

Cette cellule de contrôle de second niveau a également pour mission de produire l'ensemble des documents réglementaires à destination des autorités, d'instruire les demandes de celles-ci effectuées notamment à l'issue d'inspections dans le cadre de lettres de suite d'inspection, de déclarer les événements et incidents, piloter les actions d'investigation et mettre en oeuvre les plans d'actions correctives et préventives.

Les risques suivants sont pris en compte, notés R1 à R6, comprenant 4 menaces externes et 2 menaces internes.

Les menaces externes prises en compte sont respectivement :

- R1 : risque d'agressions externes ;
- R2 : risque d'intrusion physique dans l'installation ;
- R3 : risque de vol et/ou de détournement de matières nucléaires et/ou d'objets sensibles ;
- R4 : risque de cyberattaque et/ou d'intrusion informatique pouvant affecter l'intégrités des données sensibles.

Les menaces internes respectivement prises en compte sont :

- R5 : risque de fraude et/ou de malveillance interne ;
- R6 : risques d'anomalie/dysfonctionnement critique.

Les sources de menaces internes sont soit la malveillance interne, soit la négligence ou l'incompétence.
Des données de fonctionnement de l'installation nucléaire sont collectées par campagne, sur une période temporelle donnée. La période temporelle est par exemple de six mois ou d'un an.
En général, dans le cadre de la routine d'exploitation industrielle, le chef d'installation, rassemble et vérifie les écarts et anomalies qui sont remontés par les équipes opérationnelles au niveau de chaque procédé, sous la responsabilité du chef d'équipe concerné. Ces écarts et anomalies font l'objet d'investigations pour en identifier les causes et en évaluer les conséquences.
Les résultats de ces investigations sont soumis à l'évaluation et la validation indépendante de la cellule de contrôle de second niveau, qui enregistre ces écarts et anomalies, valide ou non leur nature « avérée » et les classe le cas échéant, en tant qu'événements et leur attribue individuellement un niveau de gravité G selon par exemple, la cotation suivante :

➢ G = 1 : événement mineur ;
➢ G = 2 : événement modéré ;
➢ G = 3 : événement grave/significatif ;
➢ G = 4 : événement sévère.

Les données d'apprentissage fournies en entrée du procédé sont des données collectées durant une campagne, voire durant un nombre prédéterminé de campagnes précédentes.
Les données collectées sont des données de fonctionnement de l'installation nucléaire.
Le périmètre spatial considéré est le périmètre du site industriel, et il est de préférence modélisé selon une modélisation multi -échelle de la manière suivante :

- Echelle 1 : périmètre du site 150 abritant l'installation nucléaire 156 ;
- Echelle 2 : périmètre de l'installation ;
- Echelle 3 : périmètre d'une cellule abritant plusieurs procédés ;
- Echelle 4 : périmètre d'un procédé.

Dans un exemple plus particulier, en considérant le périmètre du procédé (échelle 4), et un risque de vol et détournement de matières nucléaires, les évènements initiateurs identifiés suivants sont identifiés par le déploiement du procédé:

❖ Evénement 1 ($E_1$) → Intrusion d'un opérateur non habilité/non autorisé dans une cellule d'accès restreint/réglementé, abritant un procédé sensible :

➢

$$\text{Sig\_E}_1\,(t) = f\big(G_1(x,t)\big)^{n} w_1(x,t)\sigma_1(x,t)$$

❖ Evénement 2 ($E_2$) → Modification du procédé sans autorisation préalable par le Chef d'installation et non-conforme au cadre réglementaire :

>

$$\text{Sig\_E}_2\,(t) = f\big(G_2(x,t)\big)^{n} w_2(x,t)\sigma_2(x,t)$$

❖ Evénement 3 (E$_3$) -i> Falsification des données d'exploitation et de contrôle :

$$\text{Sig\_E}_3\,(t) = \big(G_3(x,t)\big)^{n} w_3(x,t)\sigma_3(x,t)$$

Dans cet exemple, les paramètres définissant les signatures élémentaires des événements initiateurs sont estimés par des algorithmes d'apprentissage machine, non supervisé ou des algorithmes d'apprentissage profond (« deep learning ») mettant en oeuvre des réseaux de neurones sur des données issues de fichiers d'écarts et anomalies disponibles au niveau de l'installation.

De manière concomitante, une estimation par apprentissage machine supervisé appliqué sur des données préalablement labélisées par des experts du domaine est appliqué.

En appliquant le modèle d'incubation à ces trois événements initiateurs E$_1$, E$_2$, E$_3$, avec $f(G_i(x,t)) = 2^{G_i}$ et $< f(G_i(x,t)) \wedge f(G_j(x,t)) > = f(G_i(x,t) \times f(G_j(s,t))$ (n étant égal à 1), on obtient la formule de l'incubation des signaux faibles précurseurs au risque de vol et détournement de matières nucléaires, au niveau d'échelle d'un procédé :

$$\Gamma(x,t) = \sum_{i \le 3} 2^{G_i} w_i(x,t)\sigma_i(x,t) + \sum_{j,k} \xi_{jk} w_{jk}(x,t) 2^{G_j} \times 2^{G_k}$$

La gravité est définie dans cet exemple comme suit :

- G = 0 : non-événement ;
- G = 1 : événement mineur ;
- G = 2 : événement modéré ;
- G = 3 : événement grave/significatif ;
- G = 4 : événement sévère.

La gravité G$_i$ ci-dessus est égale à la valeur de G pour l'événement initiateur E$_i$.

De plus les autres fonctions sont définies dans l'exemple par :

➢ $\sigma(x,t)$ = 1 si l'événement initiateur a une probabilité non négligeable de se réaliser, quel que soit la gravité de son impact et de ses conséquences, ou bien si l'événement initiateur a une probabilité quasi-nulle de se réaliser mais un impact significatif sur l'ensemble du système.

➢ $\sigma(x,t)$ = 0 si l'événement initiateur a une probabilité quasi-nulle de se réaliser avec un impact quasi-nul.

➢ $\xi(x,t)$ = {-1,0,1} en fonction de l'effet (protecteur, neutre ou négatif) de la corrélation d'événements initiateurs.

En ce qui concerne la fonction w(x,t), les fonctions Vulnérabilité V$_{ik}$ et Barrière de défense $\psi_{ik}$ pourraient être modélisées comme suit :

$$V_{ik}(x,t = -a_{ik}(x)t + b_{ik}(x)$$

$$\psi_{ik}(x,t) = c_{ik}(t)$$

Avec, par exemple, a$_{ik}$(x), b$_{ik}$(x) et c$_{ik}$(x) des fonctions polynomiales positives.

Les paramètres de ces fonctions sont calculés par apprentissage IA comme expliqué ci-dessus.

Avantageusement, l'invention permet de détecter des signaux faibles d'exposition à un risque, en particulier à un évènement redouté, ce qui permet d'augmenter la sécurisation du fonctionnement des systèmes industriels, et la prévention amont de risques (surchauffe, panne, incendie etc).

**Revendications**

1. Procédé de détection et de caractérisation de signaux faibles d'exposition à un risque dans un système industriel, un signal faible étant représentatif d'une incubation d'un évènement redouté, à partir de données relatives au système industriel collectées par au moins un capteur sur une période temporelle donnée, le procédé étant **caractérisé en ce qu'**il comporte les étapes suivantes, mises en oeuvre par un processeur :

   - à partir de données relatives audit système industriel, collectées (74) pendant ladite période, calcul (76-80) d'une signature prédictive du risque définissant une fonction d'incubation, la signature prédictive du risque comprenant un premier terme obtenu par sommation de signatures élémentaires associées à des évènements initiateurs élémentaires, chaque signature élémentaire étant dépendante de paramètres comprenant une valeur de gravité de l'évènement initiateur élémentaire, une fonction caractéristique de l'évènement initiateur élémentaire et une fonction de pondération associée à l'événement initiateur élémentaire, au moins une partie desdits paramètres étant déterminés par mise en oeuvre d'un réseau de neurones,
   - détection (102, 104) de présence d'au moins un signal faible d'exposition à un risque par comparaison de la signature prédictive du risque calculée à des signatures de risque de référence prédéterminées,
   - en cas de détection positive (104), détermination (106) d'une signature prédictive de référence associée à la signature prédictive du risque calculée et caractérisation du risque associé à ladite signature de risque de référence, ladite caractérisation comportant un affichage (122) d'un scénario de menaces préalablement déterminé et enregistré en association avec ladite signature prédictive de référence.

2. Procédé selon la revendication 1, dans lequel la fonction de pondération associée à l'événement initiateur élémentaire est une fonction déterministe-probabiliste, dépendante d'une probabilité dudit événement initiateur élémentaire en lien avec ledit événement redouté.

3. Procédé selon la revendication 1 ou 2, dans lequel la signature prédictive du risque comporte un deuxième terme dépendant de paires d'évènements initiateurs élémentaires et d'une fonction caractéristique d'intercorrélation pour chaque paire d'évènements initiateurs élémentaires.

4. Procédé selon l'une des revendications 1 à 3, dans lequel le calcul d'une signature prédictive de risque prend en compte en outre une fonction probabiliste caractéristique de bruit relatif aux données collectées.

5. Procédé selon l'une des revendications 1 à 4, dans lequel la signature élémentaire d'un événement initiateur élémentaire $E_i$ est fournie par la formule suivante :

$$Sig\_E_i(t) = f\big(G_i(x,t)\big)^n w_i(x,t)\sigma_i(x,t)$$

   Où $f(G_i(x,t))^n$ est une fonction caractéristique de la gravité de l'évènement initiateur élémentaire $E_i$, définie sur un périmètre spatial et sur une période temporelle, n étant un paramètre entier
   $\sigma_i(x,t)$ est la fonction caractéristique de l'évènement initiateur élémentaire $E_i$ et
   $w_i(x,t)$ est la fonction de pondération associée à l'événement initiateur élémentaire $E_i$.

6. Procédé selon l'la revendication 5, dans lequel la signature prédictive du risque est calculée selon la formule :

$$\Gamma(t) = \left[\sum_i Sig\_E_i(t) + \sum_{jk} \xi_{jk} w_j(x,t) w_k(x,t) < f\big(G_i(x,t)\big) \wedge f\left(G_j(x,t)\right) > \right] * B(t),$$

   Où $\xi_{jk}$ est une fonction caractéristique d'intercorrélation entre évènements initiateurs élémentaires $E_j$ et $E_k$, $< f(G_i(x, t)) \wedge f(G_j(x, t)) >$ indique une fonction reliant les fonctions caractéristiques de gravité des évènements initiateurs $E_j$ et $E_k$, et $B(x,t)$ est une fonction probabiliste caractérisant un bruit.

7. Procédé selon la revendication 5 ou 6, dans lequel la fonction caractéristique de gravité d'un événement initiateur élémentaire prend quatre valeurs différentes représentatives respectivement d'une gravité nulle, d'une gravité mineure, d'une gravité significative ou d'une gravité sévère.

**8.** Procédé selon l'une quelconque des revendications 1 à 7, dans lequel les données relatives au système industriel sont des valeurs représentatives d'équipements du système industriel, et la collecte de données est effectuée par un ou plusieurs capteurs.

**9.** Procédé selon l'une quelconque des revendications 1 à 8, comportant, suite à la collecte de données relatives au système industriel pendant ladite période, un prétraitement desdites données collectées pour formater lesdites données collectées en données numériques, et une classification par un classifieur desdites données numériques pour obtenir des valeurs de paramètres associés aux événements initiateurs élémentaires.

**10.** Procédé selon l'une quelconque des revendications 1 à 9, comportant une phase d'initialisation (50) d'une base de données (24) des signatures de risque de référence, en lien avec un ensemble d'évènements redoutés, en fonction de données collectées pour des systèmes industriels et de validations d'experts, et une mémorisation des signatures de risque de référence, de scénarios de menaces associés et d'une cartographie de risques associée.

**11.** Programme d'ordinateur comportant des instructions logicielles qui, lorsqu'elles sont exécutées par un dispositif programmable, mettent en oeuvre un procédé de détection et de caractérisation de signaux faibles d'exposition à un risque conforme aux revendications 1 à 10.

**12.** Système de détection et de caractérisation de signaux faibles d'exposition à un risque dans un système industriel, un signal faible étant représentatif d'une incubation d'un évènement redouté, à partir de données relatives au système industriel collectées par au moins un capteur sur une période temporelle donnée, le système étant **caractérisé en ce qu'**il comporte au moins un système de calcul, comportant un processeur configuré pour mettre en oeuvre :

- à partir de données relatives au système industriel collectées pendant ladite période, un module (36) de calcul d'une signature prédictive du risque, la signature prédictive du risque comprenant un premier terme obtenu par sommation de signatures élémentaires associées à des évènements initiateurs élémentaires, chaque signature élémentaire étant dépendante de paramètres comprenant une valeur de gravité de l'évènement initiateur élémentaire, une fonction caractéristique de l'évènement initiateur élémentaire et une fonction de pondération associée à l'événement initiateur élémentaire, au moins une partie desdits paramètres étant déterminés par mise en oeuvre d'un réseau de neurones,
- un module (38) de détection de présence d'au moins un signal faible d'exposition à un risque par comparaison de la signature prédictive du risque calculée à des signatures de risque de référence prédéterminées,

en cas de détection positive, application d'un module (40) de détermination d'une signature prédictive de référence associée à la signature prédictive du risque calculée et de caractérisation du risque associé à la signature de risque de référence, comportant un module affichage d'un scénario de menaces préalablement déterminé et enregistré en association avec ladite signature prédictive de référence.

**Patentansprüche**

**1.** Verfahren zur Erkennung und Charakterisierung von schwachen Signalen einer Aussetzung an ein Risiko in einem industriellen System, wobei ein schwaches Signal repräsentativ für eine Inkubation eines befürchteten Ereignisses ist, anhand von Daten in Bezug auf das industrielle System, die von mindestens einem Sensor über eine gegebenen Zeitperiode gesammelt werden, wobei das Verfahren **dadurch gekennzeichnet ist, dass** es die folgenden Schritte umfasst, die von einem Prozessor implementiert werden:

- anhand von Daten in Bezug auf das industrielle System, die während der genannten Periode gesammelt (74) werden, Berechnen (76-80) einer prädiktiven Signatur des Risikos, die eine Inkubationsfunktion definiert, die prädiktive Signatur des Risikos umfassend einen ersten Term, der durch Summieren von elementaren Signaturen erlangt wird, die mit elementaren Auslöseereignissen assoziiert sind, wobei jede elementare Signatur von Parametern abhängig ist, umfassend einen Schwerewert des elementaren Auslöseereignisses, eine charakteristische Funktion des elementaren Auslöseereignisses und eine mit dem elementaren Auslöseereignis assoziierte Gewichtungsfunktion umfassen, wobei mindestens ein Teil der Parameter durch Implementieren eines neuronalen Netzes bestimmt wird,
- Erkennen (102, 104) des Vorhandenseins mindestens eines schwachen Signals einer Aussetzung an ein Risiko durch Vergleich der berechneten prädiktiven Signatur des Risikos mit vorbestimmten Referenzrisikosignaturen,
- im Fall einer positiven Erkennung (104), Bestimmen (106) einer prädiktiven Referenzsignatur, die mit der berechneten prädiktiven Signatur des Risikos assoziiert ist, und Charakterisieren des Risikos, das mit der Referenzrisikosignatur assoziiert ist, die Charakterisierung umfassend eine Anzeige (122) eines Bedrohungsszenarios, das zuvor bestimmt und in Assoziation mit der prädiktiven Referenzsignatur registriert wurde.

2.  Verfahren nach Anspruch 1, wobei die Gewichtungsfunktion, die mit dem elementaren Auslöseereignis assoziiert ist, eine deterministisch-probabilistische Funktion ist, die von einer Wahrscheinlichkeit des elementaren Auslöseereignisses in Verbindung mit dem befürchteten Ereignis abhängt.

3.  Verfahren nach Anspruch 1 oder 2, wobei die prädiktive Risikosignatur einen zweiten Term umfasst, der von Paaren elementarer Auslöseereignisse und einer charakteristischen Funktion einer Kreuzkorrelation für jedes Paar elementarer Auslöseereignisse abhängt.

4.  Verfahren nach einem der Ansprüche 1 bis 3, wobei die Berechnung einer prädiktiven Risikosignatur zusätzlich eine charakteristische probabilistische Funktion von Rauschen in Bezug auf die gesammelten Daten berücksichtigt.

5.  Verfahren nach einem der Ansprüche 1 bis 4, wobei die elementare Signatur eines elementaren Auslöseereignisses $E_i$ durch die folgende Formel bereitgestellt ist:

$$Sig\_E_i(t) = f\big(G_i(x,t)\big)^n w_i(x,t)\sigma_i(x,t)$$

wobei $f(G_i(x,t))^n$ eine Funktion ist, die charakteristisch für die Schwere des elementaren Auslöseereignisses $E_i$ ist und über einen räumlichen Umfang und eine Zeitperiode definiert ist, wobei $n$ ein ganzzahliger Parameter ist $\sigma_i(x,t)$ die charakteristische Funktion des elementaren Auslöseereignisses $E_i$ ist; und $w_i(x,t)$ die Gewichtungsfunktion ist, die mit dem elementaren Auslöseereignis $E_i$ assoziiert ist.

6.  Verfahren nach Anspruch 5, wobei die prädiktive Signatur des Risikos gemäß der folgenden Formel berechnet wird:

$$\Gamma(t) = \left[\sum_i Sig\_E_i(t) + \sum_{jk} \xi_{jk} w_j(x,t) w_k(x,t) < f\big(G_i(x,t)\big) \wedge f\big(G_j(x,t)\big) >\right] * B(t),$$

wobei $\xi_{jk}$ eine charakteristische Kreuzkorrelationsfunktion zwischen elementaren Auslöseereignissen $E_j$ und $E_k$ ist, $< f(G_i(x,\ t)) \wedge f(G_j(x,\ t)) >$ eine Funktion angibt, die die charakteristischen Funktionen der Schwere der Auslöseereignisse $E_j$ und $E_k$ verbindet, und $B(x,t)$ eine probabilistische Funktion ist, die ein Rauschen charakterisiert.

7.  Verfahren nach Anspruch 5 oder 6, wobei die charakteristische Funktion der Schwere eines elementaren Auslöseereignisses vier verschiedene Werte annimmt, die jeweils repräsentativ für eine Schwere gleich null, eine geringe Schwere, eine erhebliche Schwere oder eine ernsthafte Schwere sind.

8.  Verfahren nach einem der Ansprüche 1 bis 7, wobei die Daten in Bezug auf das industrielle System Werte sind, die repräsentativ für Ausrüstungen des industriellen Systems sind, und das Sammeln von Daten durch einen oder mehrere Sensoren erfolgt.

9.  Verfahren nach einem der Ansprüche 1 bis 8, umfassend nach dem Sammeln von Daten in Bezug auf das industriellen System während dieser Periode eine Vorverarbeitung der gesammelten Daten, um die gesammelten Daten in numerische Daten zu formatieren, und eine Klassifizierung der numerischen Daten durch einen Klassifikator, um Werte von Parametern zu erlangen, die mit elementaren Auslöseereignissen assoziiert sind.

10. Verfahren nach einem der Ansprüche 1 bis 9, umfassend eine Initialisierungsphase (50) einer Datenbank (24) von Referenzrisikosignaturen in Verbindung mit einer Reihe von befürchteten Ereignissen, abhängig von gesammelten Daten für industrielle Systeme und Validierungen durch Fachleute, und einer Speicherung der Referenzrisikosignaturen, von assoziierten Bedrohungsszenarien und einer assoziierten Risikokartografie.

11. Computerprogramm, umfassend Softwareanweisungen, die, wenn sie von einer programmierbaren Vorrichtung ausgeführt werden, ein Verfahren zur Erkennung und Charakterisierung von schwachen Signalen einer Aussetzung an ein Risiko gemäß den Ansprüchen 1 bis 10 implementieren.

**12.** Verfahren zur Erkennung und Charakterisierung von schwachen Signalen einer Aussetzung an ein Risiko in einem industriellen System, wobei ein schwaches Signal repräsentativ für eine Inkubation eines befürchteten Ereignisses ist, anhand von Daten in Bezug auf das industrielle System, die von mindestens einem Sensor über eine gegebenen Zeitperiode gesammelt werden, wobei das System **dadurch gekennzeichnet ist, dass** es mindestens ein Berechnungssystem umfasst, umfassend einen Prozessor, der konfiguriert ist, um Folgendes zu implementieren:

- anhand von Daten in Bezug auf das industrielle System, die während der genannten Periode gesammelt werden, ein Modul (36) zum Berechnen einer prädiktiven Signatur des Risikos, die prädiktive Signatur des Risikos umfassend einen ersten Term, der durch Summieren von elementaren Signaturen erlangt wird, die mit elementaren Auslöseereignissen assoziiert sind, wobei jede elementare Signatur von Parametern abhängig ist, umfassend einen Schwerewert des elementaren Auslöseereignisses, eine charakteristische Funktion des elementaren Auslöseereignisses und eine mit dem elementaren Auslöseereignis assoziierte Gewichtungsfunktion umfassen, wobei mindestens ein Teil der Parameter durch Implementieren eines neuronalen Netzes bestimmt wird,
- ein Modul (38) zum Erkennen des Vorhandenseins mindestens eines schwachen Signals einer Aussetzung an ein Risiko durch Vergleich der berechneten prädiktiven Signatur des Risikos mit vorbestimmten Referenzrisikosignaturen,

bei positiver Erkennung, Anwenden eines Moduls (40) zum Bestimmen einer prädiktiven Referenzsignatur, die mit der berechneten prädiktiven Risikosignatur assoziiert ist, und zum Charakterisieren des Risikos, das mit der Referenzrisikosignatur assoziiert ist, umfassend ein Anzeigemodul eines Bedrohungsszenarios, das zuvor bestimmt und in Assoziation mit der prädiktiven Referenzsignatur registriert wurde.

## Claims

**1.** A method for detecting and characterizing weak signals of risk exposure in an industrial system, a weak signal being representative of an incubation of a feared event, from industrial system data collected by at least one sensor over a given time period, the method being **characterized in that** same comprises the following steps, implemented by a processor:

- from data relating to said industrial system, collected (74) during said period, computation (76-80) of a risk predictive signature defining an incubation function, the risk predictive signature comprising a first term obtained by summing elementary signatures associated with elementary initiating events, each elementary signature being dependent on parameters comprising a severity value of the elementary initiating event, a characteristic function of the elementary initiating event and a weighting function associated with the elementary initiating event, at least a part of said parameters being determined by implementing a neural network,
- detection (102, 104) of the presence of at least one weak signal of risk exposure by comparing the computed risk predictive signature with predetermined reference risk signatures,
- in the event of positive detection (104), determination (106) of a reference predictive signature associated with the computed risk predictive signature and characterization of the risk associated with the reference risk signature, said characterization comprising a display (122) of a threat scenario determined beforehand and recorded in association with said reference predictive signature.

**2.** The method according to claim 1, wherein the weighting function associated with the elementary initiating event is a deterministic-probabilistic function, dependent on a probability of said elementary initiating event related to said feared event.

**3.** The method according to claim 1 or 2, wherein the risk predictive signature includes a second term which is dependent on pairs of elementary initiating events and a characteristic inter-correlation function for each pair of elementary initiating events.

**4.** The method according to one of claims 1 to 3, wherein the computation of a risk predictive signature further takes into account, a probabilistic characteristic function of noise relative to the collected data.

5. The method according to one of claims 1 to 4, wherein the elementary signature of an elementary initiating event $E_i$ is provided by the following formula:

$$Sig\_E_i(t) = f\big(G_i(x,t)\big)^n w_i(x,t)\sigma_i(x,t)$$

Where $f(G_i(x,t))^n$ is a characteristic function of the severity of the elementary initiating event $E_i$, defined over a spatial perimeter and over a time period, $n$ being an integer parameter
$\sigma_i(x,t)$ is the characteristic function of the elementary initiating event $E_i$ and
$w_i(x,t)$ is the weighting function associated with the elementary initiating event $E_i$.

6. The method according to claim 5, wherein the risk predictive signature is computed according to the formula:

$$\Gamma(t) = \left[ \sum_i Sig\_E_i(t) + \sum_{jk} \xi_{jk} w_j(x,t) w_k(x,t) < f\big(G_i(x,t)\big) \wedge f\big(G_j(x,t)\big) > \right] * B(t),$$

Where $\xi_{jk}$ is a characteristic inter-correlation function between elementary initiating events $E_j$ and $E_k$, $< f(G_i(x,t)) \wedge f(G_j(x,t)) >$ indicates a function linking the characteristic severity functions of the initiating events $E_j$ and $E_k$, and $B(x,t)$ is a probabilistic function characterizing a noise.

7. The method according to claim 5 or 6, wherein the characteristic severity function of an elementary initiating event takes four different values representative of zero severity, minor severity, significant severity or severe severity, respectively.

8. The method according to any of claims 1 to 7, wherein the data relating to the industrial system are representative values of the equipment of the industrial system, and data are collected by one or a plurality of sensors.

9. The method according to any of claims 1 to 8, including, following the collection of data relating to the industrial system during said period, a preprocessing of said collected data so as to format said collected data into numerical data, and a classification by a classifier of said numerical data for obtaining parameter values associated with the elementary initiating events.

10. The method according to any of claims 1 to 9, including a phase of initializing (50) a database (24) of reference risk signatures, in relation to a set of feared events, depending on data collected for industrial systems and on expert validations, and a memorization of reference risk signatures, associated threat scenarios and an associated risk map.

11. A computer program including software instructions which, when executed by a programmable electronic device, use a method for detecting and characterizing weak signals of exposure to a risk according to claims 1 to 10.

12. A system for detecting and characterizing weak signals of risk exposure in an industrial system, a weak signal being representative of an incubation of a feared event, from industrial system data collected by at least one sensor over a given time period, the system being **characterized in that** same includes at least one computation system, including a processor configured for implementing:

   - a module (36) for computing, on the basis of data relating to the industrial system collected during said period, a risk predictive signature, the risk predictive signature comprising a first term obtained by summing elementary signatures associated with elementary initiating events, each elementary signature being dependent on parameters comprising a severity value of the elementary initiating event, a characteristic function of the elementary initiating event and a weighting function associated with the elementary initiating event, at least a part of said parameters being determined by implementing a neural network,
   - a module (38) for detecting the presence of at least one weak signal of risk exposure by comparing the computed risk predictive signature with predetermined reference risk signatures,

   in the event of a positive detection, applying a module (40) for determining a reference predictive signature associated with the predictive signature of the computed risk for characterizing the risk associated with said reference risk signature, including a module for displaying a threat scenario which was determined beforehand and recorded in association with said reference predictive signature.

FIG.1

FIG.2

**FIG.3**

EP 4 198 668 B1

102

104 — NON → Vers 66

OUI

120

122

124

118 — NON

OUI

106 — NON → 108

OUI

116 ← 112

114

110

Vers 56

126

**FIG.4**

**FIG.5**

EP 4 198 668 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2015186 A2

- FR 3009615

**Littérature non-brevet citée dans la description**

- **N. PALTRINIERI et al.** Learning about Risk : Machine learning for risk assessment. *Safety Science,* 2019, vol. 118